# FASCICULE DE BREVET EUROPEEN

(11) **EP 4 078 235 B1**
(45) Date de publication et mention de la délivrance du brevet: **04.02.2026**
(21) Numéro de dépôt: 20817008.4
(22) Date de dépôt: 07.12.2020
(51) Int. Cl.: G01S 17/00, G01S 7/40, G01S 7/497, G01S 17/34, G01S 17/48, G01S 17/58

(54) **CALIBRATION D'UN SYSTÈME LIDAR**
KALIBRIERUNG EINES LIDAR-SYSTEMS
LIDAR SYSTEM CALIBRATION

(30) Priorité: 20.12.2019 FR 1915061
(43) Date de publication de la demande: 26.10.2022
(73) Titulaire: Office National d'Etudes et de Recherches Aérospatiales, 91120 Palaiseau (FR)
(72) Inventeur: MICHEL, David Tomline, 91400 ORSAY (FR); GUSTAVE, François, 94230 CACHAN (FR)
(74) Mandataire: IPAZ
(86) Numéro de dépôt international: PCT/EP2020/084844
(87) Numéro de publication internationale: WO 2021/122093

(56) Documents cités:
- US-A- 5 825 464
- US-A1- 2012 050 750
- US-A1- 2012 274 937

## Description

### Domaine technique

La présente description concerne un procédé de calibration d'un système LIDAR, ainsi qu'un système LIDAR qui est adapté pour mettre en œuvre un tel procédé de calibration.

### Technique antérieure

Les systèmes LIDAR sont utilisés pour de nombreuses applications, dont certaines consistent à mesurer une distance d'éloignement d'une cible. D'autres applications consistent à mesurer une grandeur extérieure pour au moins une valeur de distance d'éloignement d'un endroit auquel se rapporte la mesure, même si la mesure de cette distance d'éloignement ne constitue pas l'objectif principal de l'application considérée. Tel est le cas des mesures anémométriques, qui sont basées sur la détection d'une partie d'un faisceau laser qui est rétrodiffusée par des particules présentes en suspension dans l'air. L'intensité de la partie du faisceau laser qui est rétrodiffusée puis détectée par le système LIDAR est alors très faible. Une valeur de vitesse des particules est déduite d'une analyse spectrale de la partie rétrodiffusée du faisceau laser qui est détectée par le système LIDAR, puis d'un calcul d'effet Doppler qui est appliqué à un écart fréquentiel qui est identifié entre cette partie rétrodiffusée du faisceau laser et le faisceau laser tel qu'émis par le système LIDAR.

Or dans un système LIDAR monostatique, une réflexion résiduelle du faisceau laser qui est émis se produit sur les composants optiques qui sont communs aux voies d'émission et de détection du système LIDAR, même si ces composants sont munis de revêtements antireflets. Le rayonnement qui est ainsi réfléchi de façon interne au système LIDAR est alors détecté par la voie de détection. Ce signal de réflexion interne au système LIDAR est souvent appelé «narcisse». Il est couramment utilisé pour constituer une référence de distance nulle ou de faible valeur fixée, afin de calibrer le système pour des distances à mesurer, ou pour des distances qui interviennent lorsque d'autres grandeurs sont mesurées en utilisant le système LIDAR. Or l'intensité du faisceau laser qui est émis est importante, et la sensibilité de détection du système LIDAR peut être très élevée, notamment lorsqu'il est conçu pour détecter du rayonnement qui est rétrodiffusé par des particules de l'atmosphère. Le signal narcisse présente alors les caractéristiques suivantes :
- il est généré par des réflexions du faisceau laser sur plusieurs composants optiques communs aux voies d'émission et de détection du système LIDAR, de sorte qu'il ne correspond pas à une valeur unique de distance où se produit une réflexion ; et
- son intensité est très supérieure aux niveaux usuels d'intensité de rayonnements qui sont rétrodiffusés par des particules atmosphériques, de sorte qu'il provoque une saturation du détecteur d'un système LIDAR qui est conçu pour détecter des rayonnements tels que produits par des particules atmosphériques rétrodiffusantes.
Pour ces raisons, le signal narcisse ne peut pas procurer une référence précise de distance. En outre, pour un système LIDAR monostatique, il empêche que soient détectés de façon satisfaisante des rayonnements qui résultent de rétroréflexions ou de rétrodiffusions sur des cibles situées à faibles distances du système LIDAR, typiquement situées à des distances comprises entre 20 m (mètre) et 150 m. La zone qui s'étend à partir de la sortie d'un système LIDAR monostatique jusqu'à la distance minimale pour laquelle une mesure peut être inhibée par le signal narcisse est alors couramment appelée zone aveugle, ou «blind zone» en anglais.

Une autre méthode de calibration en distance d'un système LIDAR consiste à disposer une cible rétroréfléchissante à distance connue en avant du système LIDAR, au-delà de la zone aveugle, puis à effectuer une séquence de mesure avec cette cible. Mais une telle méthode est fastidieuse à mettre en œuvre, et ne peut donc pas être répétée fréquemment. En outre, lorsque le système LIDAR est du type à impulsions, une telle calibration doit être effectuée avec des impulsions telles qu'utilisées pour des séquences de mesures utiles. Pour des impulsions qui sont longues, par exemple dont les durées individuelles sont supérieures à 0,5 µs (microseconde), cela nécessite de disposer une cible à plus de 75 m (mètre) du système LIDAR, ce qui est très compliqué en pratique.

Enfin, le document US 5,825,464 propose un dispositif de calibration pour système LIDAR qui est externe au système LIDAR à calibrer, et à coupler optiquement à celui-ci en utilisant une sphère intégrante.

### Problème technique

A partir de cette situation, un but de la présente invention est de permettre de calibrer en distance un système LIDAR, plus facilement et plus précisément qu'en utilisant les méthodes antérieures.

En particulier, pour un système LIDAR monostatique, l'invention a pour but de permettre une telle calibration en distance, qui ne soit pas gênée par le signal narcisse.

Un autre but de l'invention est de permettre qu'une telle calibration puisse être répétée à volonté, sans nécessiter qu'une cible soit placée à distance déterminée en avant du système LIDAR.

Un autre but encore de l'invention peut être de permettre de réaliser une calibration en distance à chaque fois qu'une séquence de mesure utile est réalisée, voire en même temps que cette séquence de mesure utile.

### Résumé de l'invention

Pour atteindre l'un au moins de ces buts ou un autre, un premier aspect de l'invention propose un nouveau procédé de calibration d'un système LIDAR, afin de fournir une valeur de référence de mesure qui corresponde à une valeur de référence de distance de propagation libre, ces valeurs de référence de mesure et de distance de propagation libre étant destinées à être utilisées comme calibration du système LIDAR pour évaluer une distance d'éloignement d'au moins une cible à caractériser en utilisant le système LIDAR. Le procédé de l'invention comprend les étapes suivantes :
/1/ coupler le système LIDAR à un chemin optique de référence qui est constitué à partir d'au moins une fibre optique efficace pour guider un rayonnement émis par le système LIDAR lors d'un fonctionnement de celui-ci, de sorte qu'une partie au moins du rayonnement parcoure le chemin optique de référence entre une voie d'émission et une voie de détection du système LIDAR, le chemin optique de référence ayant une longueur connue ;
/2/ réaliser une séquence de mesure de distance en utilisant le système LIDAR couplé au chemin optique de référence tel que résultant de l'étape /1/, pour obtenir une valeur de mesure qui est représentative d'une durée de propagation du rayonnement dans le chemin optique de référence, et qui est destinée à constituer la valeur de référence de mesure ; puis
/3/ convertir la longueur connue du chemin optique de référence en valeur de distance de propagation libre pour le rayonnement, selon un principe d'égalité de durée de propagation, pour former la valeur de référence de distance de propagation libre, et associer cette valeur de référence de distance de propagation libre à la valeur de référence de mesure afin de constituer la calibration du système LIDAR.

Ainsi, le procédé de l'invention utilise un chemin optique de référence à coupler optiquement au système LIDAR. Ce chemin optique de référence, qui est à base d'au moins une fibre optique, détermine matériellement la valeur de référence de distance de propagation libre. Ainsi, cette valeur de référence de distance de propagation libre est connue avec une précision élevée. Grâce à un tel procédé de calibration, des valeurs de distance d'éloignement qui sont déterminées à partir de fonctionnements du système LIDAR pour des cibles à caractériser, peuvent avoir des exactitudes améliorées et des précisions élevées.

De façon générale, le procédé de l'invention est compatible avec un système LIDAR de type monostatique ou de type bistatique. Dans le cadre de la présente invention, on entend par monostatique un système LIDAR pour lequel des ports optiques de sortie et de détection de ce système LIDAR sont confondus, contigus ou proches l'un de l'autre par rapport à la distance d'éloignement de la cible à caractériser. A l'inverse, on entend par bistatique un système LIDAR pour lequel les ports optiques de sortie et de détection sont écartés spatialement.

De façon générale aussi, le système LIDAR peut être adapté pour caractériser une cible unique ou un ensemble diffus de cibles multiples qui sont réparties dans une zone d'espace, lors de chaque fonctionnement de mesure de ce système LIDAR. En particulier, l'invention peut être appliquée à un système LIDAR qui est conçu pour réaliser des mesures anémométriques, en mettant en œuvre un rayonnement laser qui est émis par le système LIDAR à chaque cycle de mesure, et dont une partie est rétrodiffusée par des particules présentes en suspension dans l'air. De telles particules peuvent être des aérosols, des poussières, des grains de glace, etc., qui sont en suspension dans l'air atmosphérique, et qui forment ensemble la cible à caractériser. La distance d'éloignement de la cible est alors celle d'une zone qui contient les particules, à laquelle se rapporte le résultat de mesure, par exemple de mesure anémométrique.

En fonction de la configuration du chemin optique de référence par rapport à la fibre optique qui est utilisée pour le constituer, la longueur de ce chemin optique de référence peut être liée à celle de la fibre optique, ou liée au double de la longueur de la fibre optique. En outre, à l'étape /3/, la conversion de la longueur du chemin optique de référence en distance de propagation libre pour le rayonnement tient compte d'une différence de vitesse de propagation du rayonnement émis par le système LIDAR, qui existe entre sa propagation sous forme guidée dans la fibre optique, et sa propagation en espace libre.

De façon avantageuse, la fibre optique peut posséder une longueur telle que la distance de propagation libre qui correspond à la longueur du chemin optique de référence, soit supérieure à une éventuelle zone aveugle du système LIDAR, lorsque celui-ci est de type monostatique. Pour cela, le procédé de l'invention peut comprendre en outre l'étape préliminaire suivante, à effectuer avant l'étape /1/ lorsque le système LIDAR est de type monostatique pour lequel des ports optiques de sortie et de détection du système LIDAR sont confondus :
/0/ déterminer une valeur limite de distance telle que des parties du rayonnement émis par le système LIDAR qui sont réfléchies par des composants internes à ce système LIDAR, correspondent à des durées entre émission et détection qui sont équivalentes à celles de cibles situées à moins de cette valeur limite de distance en avant d'un port optique de sortie du système LIDAR. Les composants internes au système LIDAR qui sont susceptibles de réfléchir partiellement le rayonnement émis, c'est-à-dire de produire du signal narcisse, peuvent être un hublot de sortie, des composants de contrôle de polarisation, une ou plusieurs lentille(s) de focalisation, etc. La plus petite valeur limite de distance qui peut ainsi être déterminée est la longueur de la zone aveugle. La longueur du chemin optique de référence peut alors être sélectionnée, de préférence, telle que la valeur de distance de propagation libre soit supérieure à la valeur limite de distance qui a été déterminée à l'étape /0/.
Par exemple, la longueur de la fibre optique peut être telle que la valeur de référence de distance de propagation libre soit supérieure à 150 m.

Selon l'invention, le chemin optique de référence qui est constitué à partir de l'au moins une fibre optique est incorporé à l'intérieur du système LIDAR. Il est ainsi disponible au sein du système LIDAR, pour effectuer ou répéter à volonté des calibrations de celui-ci pendant la durée de vie du système LIDAR, en utilisant à chaque fois le procédé de l'invention.

Le chemin optique de référence qui est constitué à partir de l'au moins une fibre optique peut être adapté pour être couplé optiquement d'une manière réversible au système LIDAR à l'étape /1/, de façon à pouvoir en être découplé optiquement lors de séquences de mesures utiles pour caractériser des cibles. Notamment, il peut éventuellement être découplé optiquement du port optique de sortie du système LIDAR, et possiblement découplé optiquement aussi du port optique de détection du système LIDAR.

Avantageusement, la fibre optique qui est utilisée pour le chemin optique de référence peut être disposée sous forme d'une bobine. Le chemin optique de référence peut ainsi être léger et peu encombrant, si bien que son intégration dans le système LIDAR est facile, y compris pour un système LIDAR qui est destiné à être embarqué à bord d'un porteur tel qu'un aéronef, par exemple pour effectuer des mesures anémométriques.

De façon générale, le chemin optique de référence peut être couplé optiquement au système LIDAR réversiblement et temporairement pour la durée du procédé de calibration, par un composant de couplage optique commandé, puis découplé éventuellement pour des séquences de mesures utiles.

Alternativement, le chemin optique de référence peut rester couplé optiquement au système LIDAR de façon continue pendant une séquence de mesure utile, afin de réaliser une calibration du système LIDAR en utilisant une partie du même rayonnement que celui qui est émis par ce système LIDAR pour réaliser la mesure utile. Une telle calibration est donc appliquée directement aux conditions de réalisation de la mesure utile, notamment au rayonnement qui est mis en œuvre pour celle-ci. Ainsi, la validité de la calibration n'est pas mise en cause par d'éventuels défauts de répétabilité du rayonnement qui est émis par le système LIDAR. Cet avantage est d'autant plus significatif lorsque le rayonnement est émis sous forme d'impulsions pour la mesure utile, dont certaines caractéristiques telles qu'une forme d'enveloppe ou une valeur de fréquence optique centrale de chaque impulsion peuvent varier aléatoirement ou dériver progressivement.

Le procédé de l'invention peut comprendre en outre les étapes supplémentaires suivantes, qui constituent une séquence de mesure utile effectuée à partir du procédé de calibration :
/4/ effectuer une mesure relative à l'au moins une cible à caractériser en dirigeant une ligne de visée du système LIDAR vers cette au moins une cible indépendamment du chemin optique de référence, de façon à recueillir une autre valeur de mesure qui est représentative de la distance d'éloignement de l'au moins une cible ; puis
/5/ calculer une valeur pour cette distance d'éloignement en combinant la ainsi-nommée autre valeur de mesure avec la valeur de référence de mesure et la valeur de référence de distance de propagation libre qui correspond à la longueur du chemin optique de référence.
Alors, dans des mises en œuvre possibles de l'invention, le chemin optique de référence qui est constitué à partir de l'au moins une fibre optique peut être couplé optiquement au système LIDAR de façon continue pendant l'étape /4/, de sorte qu'une première partie d'un rayonnement qui est émis par ce système LIDAR soit utilisée pour effectuer la mesure relative à l'au moins une cible, et qu'une seconde partie du même rayonnement soit utilisée simultanément pour obtenir la valeur de mesure qui est représentative de la durée de propagation dans le chemin optique de référence. Ainsi, la valeur de référence de mesure qui est constituée par la durée de propagation dans le chemin optique de référence telle que mesurée pendant l'étape /4/ peut être utilisée à l'étape /5/.

Le système LIDAR auquel est appliqué le procédé de l'invention peut être adapté pour réaliser des mesures selon des principes quelconques, y compris des mesures de temps de vol et des mesures basées sur des niveaux d'absorption du rayonnement, etc. Toutefois, le système LIDAR peut être adapté de préférence pour effectuer des mesures selon un principe de détection hétérodyne, y compris pour fournir à l'étape /2/ la valeur de référence de mesure, et le cas échéant, pour fournir aussi à l'étape /4/ l'autre valeur de mesure qui est représentative de la distance d'éloignement de l'au moins une cible à caractériser.

Selon une première configuration qui est possible pour le chemin optique de référence, une première extrémité de la fibre optique peut être couplée à l'étape /1/ à la voie d'émission du système LIDAR, et une seconde extrémité de cette fibre optique, qui est opposée à sa première extrémité, peut être couplée à la voie de détection du système LIDAR. Ainsi, une partie au moins du rayonnement qui est émis par le système LIDAR pénètre dans la fibre optique par sa première extrémité, puis ressort par sa seconde extrémité en étant transmise à la voie de détection du système LIDAR. Une telle configuration du chemin optique de référence est compatible avec des systèmes LIDAR des deux types monostatique et bistatique. Pour une telle première configuration du chemin optique de référence, la valeur de référence de distance de propagation libre est liée à une fois la longueur de la fibre optique.

Selon une autre configuration possible du chemin optique de référence qui est compatible avec des systèmes LIDAR monostatiques, la fibre optique du chemin optique de référence peut posséder une première extrémité et une seconde extrémité, cette dernière étant opposée à la première extrémité et munie d'un réflecteur. Ainsi, du rayonnement qui se propage dans la fibre optique à partir de la première extrémité est rétroréfléchi par le réflecteur au niveau de la seconde extrémité, à l'intérieur de la fibre optique en direction de la première extrémité. L'étape /1/ comprend alors de coupler le système LIDAR à la fibre optique de sorte qu'une partie au moins du rayonnement qui est émis par le système LIDAR pénètre dans la fibre optique par sa première extrémité, et une partie au moins du rayonnement rétroréfléchi qui ressort par cette même première extrémité soit transmise à la voie de détection du système LIDAR. Pour une telle autre configuration du chemin optique de référence, la valeur de référence de distance de propagation libre est liée au double de la longueur de la fibre optique.

Lorsque que le système LIDAR est monostatique, et que le chemin optique de référence n'est couplé à ce système LIDAR que par la première extrémité de la fibre optique, la seconde extrémité étant munie d'un réflecteur, la première extrémité de la fibre optique peut être couplée optiquement à un port optique d'entrée-sortie d'un circulateur optique du système LIDAR, ce circulateur optique couplant par ailleurs les voies d'émission et de détection du système LIDAR à un port optique de sortie de ce système LIDAR. Ainsi, le circulateur optique transmet lors de l'étape /2/ le rayonnement du système LIDAR à la fibre optique via le port optique d'entrée-sortie du circulateur optique, et transmet aussi lors de la même étape /2/ à la voie de détection du système LIDAR le rayonnement qui est reçu par ce même port optique d'entrée-sortie du circulateur optique en provenance de la fibre optique. Dans ce cas, le chemin optique de référence peut en outre être adapté, ou pourvu de moyens de contrôle d'une polarisation du rayonnement, de sorte que le circulateur optique soit efficace lors de l'étape /2/. Alternativement, de tels moyens de contrôle de polarisation peuvent être intégrés au circulateur optique. Le port d'entrée-sortie du circulateur optique qui est utilisé pour coupler la première extrémité de la fibre optique aux étapes /1/ et /2/, peut aussi être utilisé, ou non, à l'étape /4/ pour le rayonnement qui est mis en œuvre lors de cette séquence de mesure utile. Lorsque le chemin optique de référence est couplé à un port optique d'entrée-sortie du circulateur optique qui est différent de celui utilisé pour émettre le rayonnement vers la cible à caractériser lors d'une séquence de mesure utile, une nouvelle calibration en distance du système LIDAR peut être effectuée en même temps que chaque séquence de mesure utile. En particulier, un tel mode de mise en œuvre de l'invention peut être obtenu en couplant l'une à l'autre les voies d'émission et de détection du système LIDAR monostatique en utilisant un circulateur optique qui est à base d'un cube polariseur. Dans ce cas, deux ports optiques d'entrée-sortie du circulateur optique qui sont constitués par deux faces différentes du cube polariseur peuvent être dédiés l'un à transmettre une partie principale du rayonnement en direction de la cible à caractériser, et l'autre à transmettre simultanément une partie secondaire du rayonnement au chemin optique de référence.

De préférence, le chemin optique de référence peut être couplé à la voie d'émission du système LIDAR en aval d'un amplificateur optique qui fait partie de cette voie d'émission, selon le sens de propagation du rayonnement dans cette voie d'émission. De cette façon, des déformations qui affectent des impulsions de rayonnement utilisées lors de chaque séquence de mesure, et qui sont causées par cet amplificateur optique, sont identiques entre le rayonnement qui parcourt le chemin optique de référence et du rayonnement qui est rétroréfléchi ou rétrodiffusé par la cible à caractériser. Ces déformations sont ainsi prises en compte efficacement dans le procédé de l'invention, pour réduire une erreur qu'elles pourraient causer sur un résultat de mesure de distance d'éloignement obtenu pour la cible à caractériser.

Selon un perfectionnement optionnel de l'invention, qui peut encore améliorer la précision de la calibration en distance du système LIDAR, la valeur de référence de distance de propagation libre peut être établie conformément à un bilan différentiel de délais de transmission, de détection et/ou de traitement du signal qui sont effectifs pour le rayonnement du système LIDAR, entre des chemins d'émission et de détection de ce rayonnement qui sont utilisés lors de l'étape /2/, et d'autres chemins d'émission et de détection du rayonnement qui sont utilisés pour caractériser l'au moins une cible, c'est-à-dire qui sont utilisés à l'étape /4/.

Un procédé qui est conforme à l'invention peut notamment être utilisé avantageusement pour un système LIDAR du type à impulsions de rayonnement séparées. Pour un tel système LIDAR impulsionnel, la distance d'éloignement de l'au moins une cible à caractériser est évaluée conformément à une durée entre une émission d'une impulsion de rayonnement en direction de cette (ces) cible(s), et une détection d'une partie de cette impulsion de rayonnement qui a été réfléchie ou rétrodiffusée par la (les) cible(s).

Dans un tel cas de système LIDAR impulsionnel, le procédé de l'invention peut comprendre en outre d'effectuer au moins l'une parmi :
- une caractérisation d'enveloppe d'impulsion, relative à une impulsion de rayonnement qui a été émise puis détectée par le système LIDAR ;
- une caractérisation d'un décalage fréquentiel, tel qu'apparaissant entre l'impulsion de rayonnement telle qu'émise par le système LIDAR, et la même impulsion de rayonnement telle que détectée ensuite par le système LIDAR ; et
- une caractérisation d'une déformation d'enveloppe d'impulsion de rayonnement, cette déformation étant causée par une saturation de la voie de détection du système LIDAR.
Cette ou ces caractérisation(s) additionnelle(s) peut (peuvent) être effectuée(s) à partir d'un signal de détection qui est produit par le système LIDAR lors de l'étape /2/, pour une ou plusieurs exécutions successives de cette étape /2/. Le procédé de calibration de l'invention peut ainsi être complété pour constituer un test de bon fonctionnement du système LIDAR, et pour calibrer le système LIDAR aussi en décalage fréquentiel. Une telle calibration en décalage fréquentiel permet de mesurer des vitesses de cibles de façon plus exacte, notamment pour des mesures anémométriques.

De façon générale pour l'invention, le chemin optique de référence peut être pourvu d'un atténuateur d'intensité, qui est agencé pour atténuer une intensité du rayonnement qui est transmis par la fibre optique à la voie de détection du système LIDAR. Un tel atténuateur d'intensité est de préférence variable. Il peut notamment comprendre un iris qui est agencé à une extrémité de la fibre optique.

Encore de façon générale pour l'invention, le système LIDAR peut être adapté pour l'une au moins des applications suivantes :
- des mesures météorologiques, par exemple des mesures de turbulences atmosphériques ;
- des mesures de diffusion de polluants atmosphériques ;
- des mesures de cisaillement d'un écoulement atmosphérique, par exemple au niveau d'un aéroport ;
- des mesures de position et de durée de vie d'au moins un vortex qui est présent dans un écoulement de fluide, en particulier des mesures de positions de cœurs de vortex ;
- des mesures anémométriques qui sont effectuées à partir d'un aéronef en vol, notamment à partir d'un dirigeable ou d'un drone ;
- des mesures anémométriques qui sont effectuées pour optimiser un fonctionnement d'éolienne ; et
- des mesures anémométriques qui sont effectuées pour ajuster un vol d'aéronef en formation, ou pour ajuster un vol de drone.

Enfin, lorsque le système LIDAR est monostatique et adapté pour focaliser le rayonnement qui est émis à chaque séquence de mesure à une distance de focalisation en avant du port optique de sortie de ce système LIDAR, une séquence de mesure de cette distance de focalisation peut comprendre les étapes suivantes :
- contrôler le système LIDAR pour émettre au moins une impulsion de rayonnement, puis collecter un signal de détection qui est produit par la voie de détection du système LIDAR, correspondant à des parties du rayonnement émis qui ont été rétrodiffusées à des distances variables;
- déterminer un instant de détection qui correspond à un maximum d'un rapport signal-sur-bruit pour le signal de détection collecté ; puis
- calculer une valeur de distance d'éloignement qui est associée à l'instant de détection déterminé, en utilisant la valeur de référence de distance de propagation libre qui correspond à la longueur du chemin optique de référence, et attribuer la valeur de distance d'éloignement calculée à la distance de focalisation.
Pour augmenter la précision de la valeur qui est ainsi déterminée pour la distance de focalisation, une (des) impulsion(s) courte(s) peut (peuvent) être utilisée(s) de préférence.

Un second aspect de l'invention concerne un système LIDAR qui est muni d'un chemin optique de référence constitué à partir d'au moins une fibre optique efficace pour guider un rayonnement émis par ce système LIDAR lors d'un fonctionnement de celui-ci. Ainsi, une partie au moins du rayonnement parcourt le chemin optique de référence entre une voie d'émission et une voie de détection du système LIDAR. Le système LIDAR est en outre adapté pour mettre en œuvre un procédé de calibration qui est conforme au premier aspect de l'invention, possiblement avec les perfectionnements cités et caractéristiques supplémentaires optionnelles. Notamment, le chemin optique de référence qui est constitué à partir de l'au moins une fibre optique est incorporé à l'intérieur du système LIDAR.

De préférence, le chemin optique de référence peut être couplé optiquement à la voie d'émission et à la voie de détection du système LIDAR, en parallèle avec un trajet externe au système LIDAR qui est destiné à être suivi par du rayonnement émis par celui-ci en direction de l'au moins une cible, et utile pour évaluer la distance d'éloignement de cette cible. De cette façon, le rayonnement provenant de la voie d'émission est transmis simultanément au chemin optique de référence et en direction de l'au moins une cible, et une même séquence de détection fournit à la fois la valeur de référence de mesure et une autre valeur de mesure qui est relative au trajet externe jusqu'à la cible.

En particulier, un système LIDAR qui est conforme au second aspect de l'invention peut avoir l'une au moins des caractéristiques suivantes :
- il peut être adapté pour mettre en œuvre un mode de détection hétérodyne ;
- il peut être d'un type à impulsions de rayonnement séparées, pour lequel la distance d'éloignement de la (les) cible(s) à caractériser est évaluée à partir d'une durée entre une émission d'une impulsion de rayonnement en direction de cette (ces) cible(s), et une détection d'une partie de l'impulsion de rayonnement qui a été réfléchie ou rétrodiffusée par la (les) cible(s) ;
- il peut comprendre une source laser, pour produire le rayonnement qui est émis en direction de la (les) cible(s) à caractériser ; et
- il peut être adapté pour mesurer au moins une grandeur atmosphérique, notamment une vitesse de vent, à partir d'une partie du rayonnement qui est émis par le système LIDAR, cette partie de rayonnement étant rétrodiffusée par des particules en suspension dans l'air atmosphérique, puis détectée par le système LIDAR.

### Brève description des figures

Les caractéristiques et avantages de la présente invention apparaîtront plus clairement dans la description détaillée ci-après d'exemples de mises en œuvre non-limitatifs, en référence aux figures annexées parmi lesquelles :
[Fig. 1a] est un schéma synoptique d'un premier type de système LIDAR auquel l'invention peut être appliquée ;
[Fig. 1b] correspond à [Fig. 1a] pour un second type de système LIDAR auquel l'invention peut aussi être appliquée ;
[Fig. 2] illustre une utilisation possible d'un type de circulateur optique au sein d'un système LIDAR pour mettre en œuvre l'invention ;
[Fig. 3a] à [Fig. 3d] sont quatre schémas de montages optiques qui peuvent être utilisés pour un perfectionnement de l'invention ; et
[Fig. 4] est un schéma synoptique du procédé de l'invention.

### Description détaillée de l'invention

Pour raison de clarté, les dimensions des éléments qui sont représentés dans ces figures ne correspondent ni à des dimensions réelles, ni à des rapports de dimensions réels. En outre, les éléments qui sont représentés ne le sont que symboliquement, étant entendu que des composants qui ne sont pas concernés directement par l'invention, ou qui peuvent être adaptés de façon spontanée par l'Homme du métier, ne sont pas représentés ni décrits. Enfin, des références identiques qui sont indiquées dans des figures différentes désignent des éléments identiques ou qui ont des fonctions identiques.

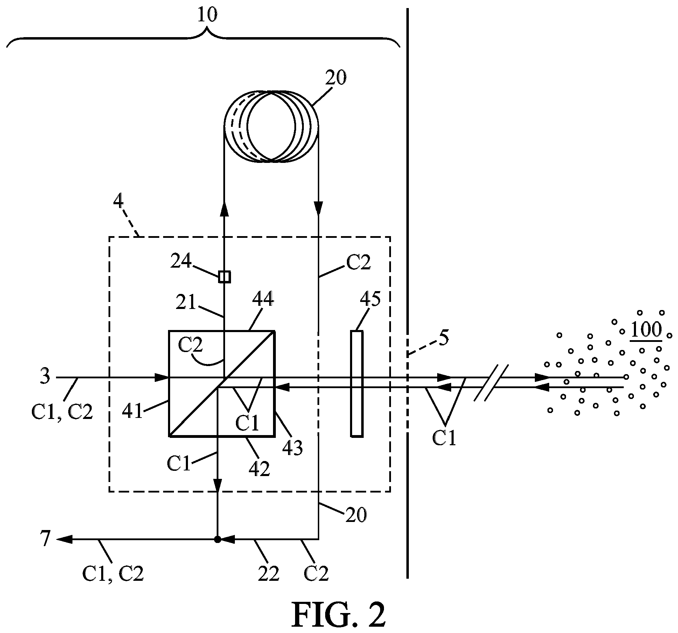

L'invention est maintenant décrite, à titre d'exemple, pour un système LIDAR monostatique de type impulsionnel à détection hétérodyne. Toutefois, l'invention peut être transposée facilement, à partir de la description qui suit, à d'autres types de systèmes LIDAR, notamment des systèmes LIDAR à émission continue, et à des modes de détection autres que la détection hétérodyne. De façon générale, l'invention concerne la conversion en valeurs de distance, de valeurs de mesure qui sont délivrées par un système LIDAR. Chaque valeur de mesure est représentative d'une durée qui est mesurée par le système LIDAR, entre l'émission d'un rayonnement par ce système et sa détection consécutive. Toutefois, cette valeur de mesure peut être un décalage temporel, une tension électrique, un écart de fréquence, etc., en fonction du mode de détection et du type de traitement du signal qui sont utilisés dans chaque système LIDAR. En outre, à titre d'exemples, les systèmes LIDAR qui sont décrits ci-dessous, sont adaptés pour réaliser des mesures anémométriques, en utilisant une rétrodiffusion de rayonnement laser qui est produite par des particules présentes en suspension dans l'air. Ces particules rétrodiffusantes, qui constituent la cible à caractériser, sont désignées par la référence 100 dans [Fig. 2].

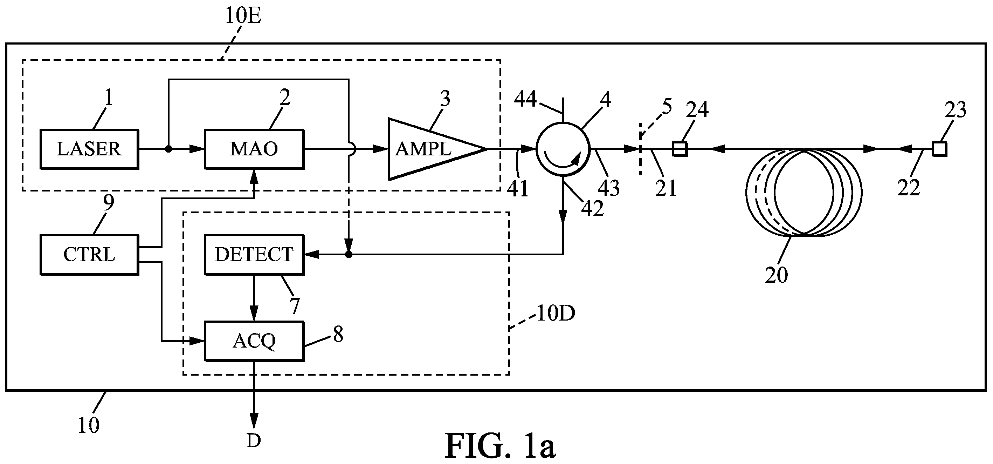

Conformément à [Fig. 1a], le système LIDAR 10 comprend une voie d'émission 10E et une voie de détection 10D. La voie d'émission 10E comprend une source laser 1, qui produit un rayonnement monochromatique pouvant avoir une longueur d'onde égale à 1545 nm (nanomètre) lorsque ce rayonnement se propage dans l'air, au moins un modulateur acousto-optique 2, noté MAO et contrôlé pour former des impulsions successives à partir du rayonnement laser qui est produit par la source 1, et un amplificateur optique 3, noté AMPL. Le modulateur acousto-optique 2 produit en outre un décalage en fréquence du rayonnement laser qui est émis par le système LIDAR 10 vers une cible par rapport au rayonnement laser tel que produit par la source 1. De cette façon, un signal de détection hétérodyne qui est délivré par la voie de détection 10D possède une fréquence de battement non-nulle lorsque le rayonnement est rétroréfléchi par une cible qui est immobile. La voie de détection 10D comprend un détecteur 7, noté DETECT, et une carte d'acquisition 8, notée ACQ. La carte d'acquisition 8 est connectée pour recevoir un signal électrique de détection hétérodyne qui est produit par le détecteur 7, appliquer un traitement à ce signal pour en déduire une valeur de mesure qui est représentative de la durée entre l'émission d'une impulsion de rayonnement laser par la voie d'émission 10E et la détection d'une partie de cette impulsion telle que reçue par la voie de détection 10D, puis pour convertir cette valeur de mesure en une valeur D de distance d'éloignement des particules qui ont rétrodiffusé le rayonnement laser. Possiblement, un amplificateur de signal électrique, non représenté, peut être utilisé sur la liaison de transmission du signal électrique entre le détecteur 7 et la carte d'acquisition 8. Conformément au mode de détection hétérodyne, le détecteur 7 reçoit en entrée un mélange de la partie de chaque impulsion qui a été reçue par la voie de détection 10D, avec une partie du rayonnement laser d'émission qui est prélevée entre la source 1 et le modulateur acousto-optique 2. De façon connue, la partie du rayonnement laser d'émission qui est transmise au détecteur 7 à partir de la voie d'émission 10E peut subir diverses transformations intermédiaires, entre son prélèvement dans la voie d'émission 10E et le détecteur 7. Le modulateur acousto-optique 2 et la carte d'acquisition 8 sont commandés par un contrôleur 9, qui est noté CTRL et procure au système son fonctionnement LIDAR.

Lorsque le système LIDAR 10 est du type monostatique, les voies d'émission 10E et de détection 10D peuvent être couplées par un circulateur optique 4 à un port optique 5, ce dernier faisant office à la fois de port optique de sortie du rayonnement vers l'extérieur du système LIDAR pour la voie d'émission 10E et de port optique de détection pour la voie de détection 10D, pour collecter du rayonnement rétrodiffusé en provenance de l'extérieur du système LIDAR. Alors, la voie d'émission 10E est couplée optiquement à un port optique d'entrée 41 du circulateur optique 4, la voie de détection 10D est couplée optiquement à un port optique de sortie 42 du circulateur optique 4, et le port optique 5 du système LIDAR 10 est couplé optiquement à un port optique mixte d'entrée-sortie 43 du circulateur optique 4.

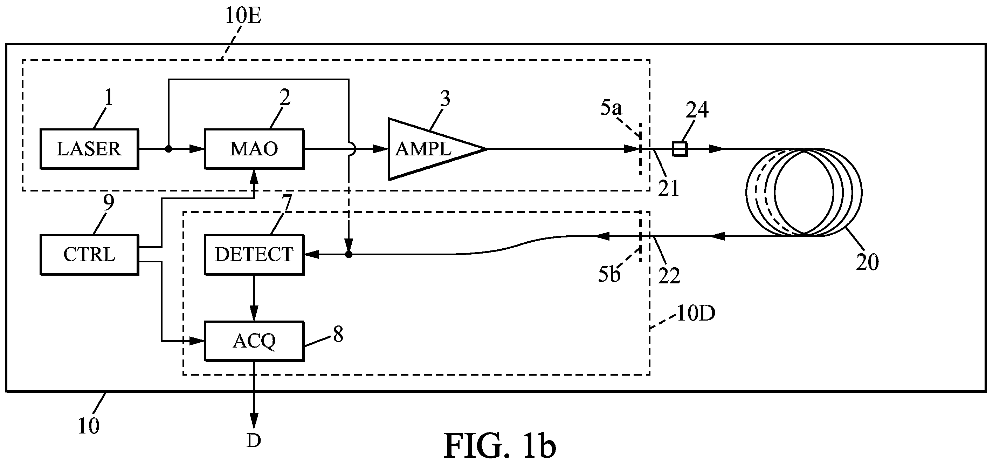

Dans une configuration alternative du système 10, qui est illustrée par [Fig. 1b], le port optique de sortie 5a de la voie d'émission 10E et le port optique de détection 5b de la voie de détection 10D peuvent être séparés. Aucun circulateur optique n'est alors utilisé entre les voies d'émission 10E et de détection 10D. Le port optique de sortie 5a est agencé pour transmettre du rayonnement issu de la voie d'émission 10E vers l'extérieur du système LIDAR, et le port optique de détection 5b est agencé pour collecter le rayonnement rétrodiffusé en provenance de l'extérieur du système LIDAR. Lorsque les ports optiques 5a et 5b sont contigus ou suffisamment rapprochés l'un de l'autre, le système LIDAR 10 est encore du type monostatique.

L'invention objet de la présente description concerne notamment la conversion qui est effectuée au sein de la carte d'acquisition 8, d'une valeur de mesure qui est représentative de la durée entre l'émission d'une impulsion et sa détection après rétrodiffusion, en une valeur D de la distance d'éloignement des particules qui ont produit la rétrodiffusion. Cette conversion nécessite une étape de calibration, qui est réalisée selon l'invention en couplant un chemin optique de référence au système LIDAR 10. Ce chemin optique de référence comprend une fibre optique 20 de longueur connue, notée L, et peut avoir plusieurs configurations. Il est incorporé dans le système LIDAR 10, par exemple en étant logé dans un boîtier de celui-ci.

Selon une première configuration possible du chemin optique de référence, qui est représentée dans [Fig. 1a], la fibre optique 20 est couplée au port optique 5 du système LIDAR 10 par une première extrémité de cette fibre optique, désignée par la référence 21. L'extrémité opposée de la fibre optique 20, qui est désignée par la référence 22, peut être munie d'un réflecteur 23 efficace pour la longueur d'onde du rayonnement émis par le système LIDAR 10. Dans ce cas, la longueur du chemin optique de référence correspond à un aller-retour du rayonnement dans la fibre optique 20. Elle est notée D_{ref} et est égale à 2 · L · n_{eff}, où n_{eff} désigne l'indice effectif de la fibre optique 20 pour la longueur d'onde du rayonnement émis par le système LIDAR 10. Autrement dit, la vitesse de propagation du rayonnement qui est émis par le système LIDAR 10 dans la fibre optique 20 est C/n_{eff}, où C est la vitesse de propagation libre du rayonnement dans l'air. Dans la partie générale de la présente description, D_{ref} a été appelée valeur de référence de distance de propagation libre, «propagation libre» désignant une propagation du rayonnement dans l'air, par opposition à la propagation guidée du rayonnement à l'intérieur de la fibre optique 20. La longueur d'onde d'un rayonnement désigne sa période spatiale lorsqu'il se propage de façon libre dans l'air.

Selon une seconde configuration possible du chemin optique de référence, représentée dans [Fig. 1b], la fibre optique 20 est couplée au port optique de sortie 5a du système LIDAR 10 par son extrémité 21, et couplée simultanément au port optique de détection 5b par son autre extrémité 22, sans utiliser de réflecteur 23. L'extrémité 21 réalise la transmission du rayonnement à partir de la voie d'émission 10E du système LIDAR 10 à la fibre optique 20, et l'extrémité 22 réalise la transmission en retour du rayonnement de la fibre optique 20 à la voie de réception 10R du système LIDAR 10. Pour cette seconde configuration, D_{ref} = L · n_{eff}, en reprenant les notations précédentes.

Lorsque le chemin optique de référence comprend des composants additionnels, des longueurs supplémentaires de propagation qui sont provoquées par ces composants additionnels peuvent être prises en compte en adaptant les expressions précédentes de la valeur de référence de distance de propagation libre D_{ref}, pour obtenir une calibration encore plus précise. L'Homme du métier saura spontanément adapter les expressions précédentes de D_{ref} dans ce but.

Pour les deux configurations qui viennent d'être décrites, relatives à des systèmes LIDAR monostatiques, la longueur L de la fibre optique 20 est choisie de préférence pour que la valeur correspondante de distance de propagation libre D_{ref} soit supérieure à 150 m. De cette façon, la partie du rayonnement qui est retransmise par la fibre optique 20 à la voie de détection 10D du système LIDAR 10 est séparée temporellement d'un éventuel signal narcisse.

La fibre optique 20 est de préférence agencée sous forme d'une bobine peu encombrante, et telle que ses extrémités 21 et 22 soient facilement accessibles.

Encore pour les deux configurations qui viennent d'être décrites, le chemin optique de référence peut être pourvu d'un atténuateur d'intensité 24, afin d'éviter que le rayonnement utilisé pour la calibration, qui se propage dans le chemin optique de référence au lieu d'être rétrodiffusé par les particules en suspension dans l'air, ne provoque une saturation de la voie de détection 10D. L'atténuateur 24 peut être constitué de multiples façons, et être à niveau variable d'atténuation. Par exemple, ce peut être un iris ajustable en ouverture. Pour de tels couplages au(x) port(s) optique(s) du système LIDAR 10, un mode de couplage amovible ou réversible peut être prévu, de sorte que le système LIDAR 10 soit opérationnel pour des mesures utiles qui sont effectuées sur les particules présentes en suspension dans l'air, après que la calibration a été effectuée.

En outre, il n'est pas nécessaire que le chemin optique de référence qui est utilisé pour calibrer le système LIDAR 10 en distance, soit couplé au(x) même(s) port(s) optique(s) que celui (ceux) utile(s) pour une (des) cible(s) à caractériser. Par exemple, dans une configuration de système LIDAR monostatique telle que représentée dans [Fig. 1a], le circulateur optique 4 peut avoir un port optique supplémentaire, qui est désigné par la référence 44. Ce port optique supplémentaire 44, qui est de type mixte d'entrée-sortie, n'est pas utilisé pour des mesures utiles qui sont effectuées sur des cibles à caractériser. Alors, l'extrémité 21 de la fibre optique 20 du chemin optique de référence, lorsque ce chemin est constitué par un aller-retour du rayonnement dans la fibre optique 20, peut être connectée au port optique supplémentaire 44 du circulateur optique 4. Lorsqu'une telle configuration est utilisée pour le chemin optique de référence et pour son couplage au système LIDAR 10, le chemin optique de référence peut comporter en outre des moyens de contrôle de la polarisation du rayonnement. Ces moyens de contrôle de polarisation (non-représentés) assurent que du rayonnement qui rentre dans ce circulateur optique 4 par le port optique 41 ressorte par le port optique supplémentaire 44, et que du rayonnement qui rentre par ce port optique supplémentaire 44 ressorte par le port optique 42, lorsque le port optique 43 est inhibé momentanément. De façon connue, de tels moyens de contrôle de polarisation peuvent alternativement être intégrés dans le circulateur optique 4, plutôt que dans le chemin optique de référence.

Par ailleurs, il peut être préférable de coupler optiquement l'extrémité 21 de la fibre optique 20 à la voie d'émission 10E en aval de l'amplificateur optique 3, pour que des déformations que pourrait produire l'amplificateur optique 3 affectent identiquement des impulsions de rayonnement qui sont transmises à la fibre optique 20 et d'autres impulsions qui sont émises en direction d'une cible à caractériser.

[Fig. 2] montre une réalisation possible du circulateur optique 4 qui est utilisé dans un système LIDAR 10 conforme à [Fig. 1a]. Elle montre aussi une mise en œuvre possible de ce circulateur optique 4 suivant laquelle la fibre optique 20 est couplée de façon permanente au port optique supplémentaire 44. Le circulateur optique 4 comprend un cube polariseur à quatre faces qui constituent les ports optiques 41-44, respectivement. Le rayonnement à émettre par le système LIDAR 10 provient de l'amplificateur optique 3. Il comporte une composante principale C1 qui possède une polarisation linéaire verticale, et qui est destinée à être transmise en direction de la cible à caractériser, désignée par la référence 100. Il comporte en outre une composante secondaire C2 qui possède une polarisation linéaire horizontale, et qui est destinée à être transmise au chemin optique de référence. De façon connue, un rapport d'intensité entre les composantes C1 et C2 peut être ajusté en tournant le cube polariseur par rapport à une direction de polarisation linéaire du rayonnement laser tel que provenant de l'amplificateur optique 3, ou par rapport à un polariseur linéaire (non représenté) qui peut être situé entre l'amplificateur optique 3 et le circulateur optique 4. Les deux composantes C1 et C2 pénètrent dans le cube polariseur par celle de ses faces qui constitue le port optique 41. La composante principale C1, à polarisation linéaire verticale, est transmise sans déviation à travers la face opposée du cube polariseur, qui constitue le port optique 43. Une lame quart-d'onde 45, qui est située entre le port optique 43 du cube polariseur et le port optique 5 du système LIDAR 10, transforme la polarisation linéaire verticale de cette composante principale C1 en une polarisation circulaire gauche. Après rétroréflexion ou rétrodiffusion sur la cible 100, une partie du rayonnement de la composante principale C1 possède une polarisation circulaire droite, qui est transformée en polarisation linéaire horizontale par la lame quart d'onde 45, et qui pénètre à nouveau dans le cube polariseur par le port optique 43. Elle est alors réfléchie au sein du cube polariseur pour ressortir par celle de ses faces qui constitue le port optique 42, en direction du détecteur 7. Simultanément, la composante secondaire C2, à polarisation linéaire horizontale, après avoir aussi pénétré dans le cube polariseur par sa face qui constitue le port optique 41 du circulateur optique 4, est réfléchie au sein du cube polariseur pour ressortir par celle de ses faces qui constitue le port optique supplémentaire 44. L'extrémité 21 de la fibre optique 20 du chemin optique de référence est couplée à ce port optique 44, et son extrémité opposée 22 est couplée à l'entrée optique de la voie de détection 10D, en direction du détecteur 7. La composante secondaire C2 se propage ainsi sélectivement dans le chemin optique de référence. Dans ces conditions, lorsque la distance à laquelle se trouve la cible 100 est différente de la longueur de distance de propagation libre D_{ref} du chemin optique de référence, le signal de détection hétérodyne qui est délivré par le détecteur 7 possède deux contributions séparées : une première contribution qui est produite par la composante principale C1 et qui permet de caractériser la cible 100, lors d'une séquence de mesure utile, et une seconde contribution qui est produite par la composante secondaire C2 et qui permet d'appliquer le procédé de calibration de l'invention en même temps que la séquence de mesure utile est réalisée.

De façon générale, le couplage de l'une au moins des extrémités 21 et 22 de la fibre optique 20 à la voie d'émission 10E ou la voie de détection 10D, respectivement, du système LIDAR 10 pour sa calibration en distance, peut être amovible. Autrement dit, le chemin optique de référence peut être conçu pour être couplé ou découplé optiquement aux voies d'émission 10E et de détection 10D du système LIDAR 10, réversiblement en fonction d'une commande appropriée pour commuter entre une séquence de calibration et une séquence de mesure utile pour le système LIDAR. Alternativement, lorsque la fibre optique 20 est couplée aux voies d'émission 10E et de détection 10R du système LIDAR 10 en parallèle du chemin optique en direction et en provenance de la cible 100, son couplage peut être permanent si bien qu'il est possible de répéter le procédé de calibration à chaque séquence de mesure utile pour caractériser la cible. Dans le cas d'un tel couplage permanent, il peut être conçu avantageusement pour qu'une partie principale, par exemple plus de 90%, voire plus de 99%, du rayonnement qui est issu de la voie d'émission 10E à chaque séquence de mesure soit émise en direction de la cible 100, et qu'une partie complémentaire mineure de ce rayonnement soit transmise au chemin optique de référence.

La séquence de calibration du système LIDAR 10 consiste à obtenir une valeur de mesure pour la durée entre émission et détection d'une impulsion qui se propage dans le chemin optique de référence. Elle peut être constituée par une séquence de fonctionnement du système LIDAR 10, qui est identique à une séquence de fonctionnement telle que mise en œuvre pour une mesure utile sur cible à caractériser. Le résultat de la séquence de calibration est une valeur de durée mesurée ΔT_{ref}, qui est associée à la valeur de référence de distance de propagation libre D_{ref}, telle que définie plus haut en fonction de la configuration du chemin optique de référence. Ainsi, lorsqu'une fibre optique 20 est utilisée pour la séquence de calibration, dont la longueur de fibre L correspond à une valeur 38 m pour la valeur de référence de distance de propagation libre D_{ref}, une valeur proche de 254 ns (nanoseconde) est obtenue pour la durée mesurée ΔT_{ref}. Le procédé de calibration permet de prendre en compte pour des mesures utiles ultérieures, la différence qui existe entre ΔT_{ref} et le résultat du quotient de D_{ref} par C. La valeur de mesure qui est représentative de la durée ΔT_{ref} a été appelée valeur de référence de mesure dans la partie générale de la présente description.

Une séquence de mesure utile qui est effectuée pour caractériser une cible, par exemple pour mesurer la vitesse de déplacement d'un ensemble diffus de particules en suspension dans l'air, fournit une autre valeur de durée mesurée ΔTₘₑₛ. Cette dernière a été appelée valeur de mesure dans la partie générale de la présente description, et est obtenue à l'étape /4/. La séquence de mesure utile est effectuée en découplant si nécessaire le chemin optique de référence du système LIDAR 10, de sorte que chaque impulsion laser qui est émise par le LIDAR 10 soit rétrodiffusée par les particules, puis détectée en retour par le système LIDAR 10. Alors, une valeur D peut être obtenue à l'étape /5/ pour la distance d'éloignement de l'ensemble de particules par rapport au système LIDAR 10, en combinant les valeurs de durées mesurées ΔTₘₑₛ et ΔT_{ref} avec la valeur de référence de distance de propagation libre D_{ref} de la façon suivante : D = D_{ref} + (ΔTₘₑₛ - ΔT_{ref}) · C/2. Une erreur résiduelle, qui a été déterminée égale à 0,02 m pour un système LIDAR utilisé comme exemple, peut affecter la calibration en distance du système LIDAR 10, lorsque cette calibration est effectuée puis utilisée pour des séquences de mesures utiles de la façon qui vient d'être décrite.

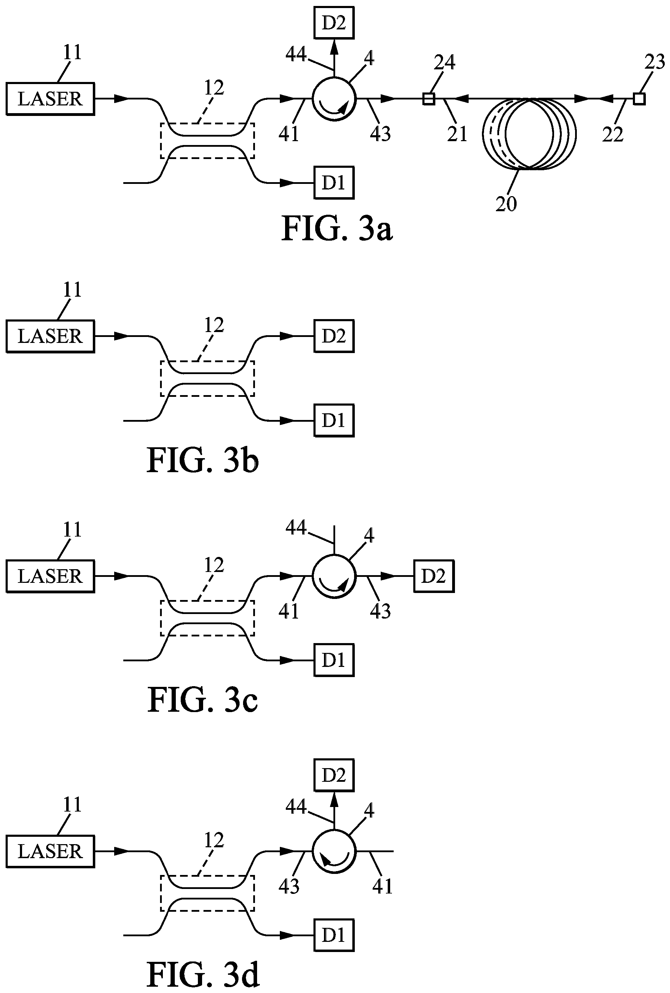

L'erreur résiduelle du procédé de calibration qui vient d'être décrit peut en partie résulter du fait que le chemin optique qui est suivi par le rayonnement à l'intérieur du système LIDAR 10 ne soit pas le même en dehors du chemin optique de référence entre la séquence de calibration et la séquence de mesure utile, et/ou que la valeur de distance de propagation libre ne puisse pas être déterminée de façon suffisamment précise par calcul à partir de la longueur de la fibre optique 20. Tel est le cas, par exemple, lorsque le chemin optique de référence qui possède la configuration représentée dans [Fig. 1a] est couplé au port optique supplémentaire 44 du circulateur optique 4, alors que le rayonnement est transmis par le port optique d'entrée-sortie 43 du circulateur optique 4 et par le port optique 5 lors d'une séquence de mesure utile. Pour prendre en compte cette source d'erreur, les quatre montages de [Fig. 3a]-[Fig. 3d] peuvent être réalisés et utilisés pour mesurer des écarts temporels Δt₁-Δt₄. Dans ces figures, la référence 11 désigne une source laser qui peut posséder de préférence une même valeur de longueur d'onde que la source 1 du système LIDAR 10, et la référence 12 désigne un coupleur optique, par exemple du type coupleur 50%-50% à ondes évanescentes. La source 11 est connectée à une entrée du coupleur optique 12, et l'autre entrée du coupleur optique 12 n'est pas utilisée. Le chemin optique de référence, qui peut notamment être constitué par les composants 20, 23 et 24, et des composants supplémentaires éventuels, est le même que celui utilisé pour l'étape /2/ avec le système LIDAR 10 de [Fig. 1a]. D1 et D2 sont deux photodétecteurs qui, par comparaison entre les signaux de détection qu'ils produisent respectivement, fournissent des mesures d'écarts temporels qui séparent un instant de détection qui est relatif au photodétecteur D2 par rapport à un instant de détection qui est relatif au photodétecteur D1, pour des parties de rayonnement qui parviennent respectivement à ces photodétecteurs. Par exemple, les photodétecteurs D1 et D2 sont des photodiodes rapides ou ultrarapides qui sont connectées à des entrées d'un oscilloscope. Le port optique 42 du circulateur optique 4 n'est jamais utilisé dans ces montages, et le photodétecteur D1 est toujours couplé optiquement à une même première sortie du coupleur optique 12.

[Fig. 3a] : pour ce premier montage, le port optique d'entrée 41 du circulateur optique 4 est couplé à une seconde sortie du coupleur optique 12, et le chemin optique de référence est couplé optiquement au port optique 43 du circulateur optique 4. Le photodétecteur D2 est couplé optiquement au port optique supplémentaire 44 du circulateur optique 4. Le port optique 42 du circulateur optique 4 est inhibé. L'écart temporel Δt₁ qui est ainsi mesuré, prend en compte la durée de propagation du rayonnement dans le chemin optique de référence.

[Fig. 3b] : pour ce deuxième montage, les deux photodétecteurs D1 et D2 sont directement couplés optiquement, un-à-une, aux deux sorties du coupleur optique 12. L'écart temporel Δt₂ est ainsi mesuré. Ce second montage permet de prendre en compte une dissymétrie qui pourrait exister entre les deux sorties du coupleur optique 12.

[Fig. 3c] : ce troisième montage reprend le couplage du circulateur optique 4 au coupleur optique 12 tel que mis en œuvre pour le premier montage, mais le chemin optique de référence est supprimé et remplacé par le photodétecteur D2 au port optique 43 du circulateur optique 4. Les ports optiques 42 et 44 du circulateur optique 4 sont inhibés. L'écart temporel Δt₃ est ainsi mesuré.

[Fig. 3d] : pour ce quatrième montage, le circulateur optique 4 est retourné, à partir du troisième montage, puis couplé par son port optique d'entrée-sortie 43 à la seconde sortie du coupleur optique 12. Le photodétecteur D2 est couplé optiquement au port optique supplémentaire 44 du circulateur optique 4, et les ports optiques 41 et 42 de ce dernier sont inhibés. L'écart temporel Δt₄ est ainsi mesuré.

La valeur de référence de distance de propagation libre D_{ref} à associer à la valeur de référence de mesure ΔT_{ref} pour constituer la calibration du système LIDAR 10 est alors D_{ref} = C · (Δt₁ + Δt₂ - Δt₃ - Δt₄). Cette calibration est à utiliser pour calculer la distance d'éloignement D lors d'une séquence de mesure utile, à la place du résultat d'un calcul de D_{ref} à partir de la longueur L de la fibre optique 20 tel que mentionné plus haut. Il s'applique lorsque la configuration de [Fig. 1a] est utilisée avec le chemin optique de référence qui est couplé au port optique d'entrée-sortie supplémentaire 44 du circulateur optique 4 pour la séquence de calibration, et le port optique de sortie 5 du système LIDAR 10 qui est couplé au port optique d'entrée-sortie 43 du circulateur optique 4 pour la séquence de mesure utile. La correction qui est ainsi apportée sur la valeur de référence de distance de propagation libre D_{ref} est d'environ 0,02 ns, correspondant à un écart de distance de propagation libre d'environ 4 mm (millimètre).

Par ailleurs, le signal de détection hétérodyne qui est obtenu lors d'une séquence de calibration exécutée selon l'invention en couplant le chemin optique de référence au système LIDAR 10, constitue une image temporelle de la forme de l'impulsion de rayonnement, telle que cette impulsion est reçue après propagation dans le chemin optique de référence. Sa forme d'enveloppe d'impulsion peut être caractérisée par exemple par une valeur de largeur à mi-hauteur, désignée par FWHM pour «full width at half maximum» en anglais, et une largeur à -30 dB (décibel), notée I₃₀. Les valeurs FWHM=75 ns et I₃₀=120 ns ont ainsi été obtenues, pour une impulsion de rayonnement qui s'étend en propagation libre sur environ 22,5 m en considérant sa largeur à mi-hauteur, et sur environ 36 m à -30 dB (décibel). En supposant que le chemin optique de référence n'introduit pas de distorsion significative de chaque impulsion, une telle caractérisation de la forme d'enveloppe des impulsions permet de vérifier si le fonctionnement du système LIDAR 10 est correct.

Le signal de détection hétérodyne qui est obtenu lors d'une séquence de calibration exécutée selon l'invention en couplant le chemin optique de référence au système LIDAR 10, permet aussi de caractériser un décalage fréquentiel de l'impulsion telle que détectée après propagation dans le chemin optique de référence, par rapport à l'impulsion telle que produite par la voie d'émission du système LIDAR 10. Un décalage fréquentiel de 3 MHz (mégahertz) a ainsi été mesuré à titre d'exemple, pour une valeur de longueur d'onde du rayonnement qui est égale à 1545 nm. Un tel décalage fréquentiel peut être causé par un ou plusieurs composant(s) du système LIDAR 10 qui aurait (auraient) un comportement variable en fonction de la longueur d'onde, et altérerait (altéreraient) ainsi la forme des impulsions, y compris en modifiant leur valeur centrale de longueur d'onde. Une telle calibration en décalage fréquentiel est particulièrement utile pour des mesures anémométriques, pour séparer la contribution d'effet Doppler de la contribution interne au système LIDAR 10 dans les décalages fréquentiels mesurés.

Enfin, lorsque le chemin optique de référence est pourvu d'un atténuateur 24 qui est variable, la caractérisation de la forme d'enveloppe de l'impulsion de rayonnement peut être répétée pour des ajustements successifs de l'atténuateur 24 qui correspondent à des niveaux d'atténuation d'intensité qui sont de plus en plus faibles. Lorsque le niveau d'atténuation est suffisamment élevé, aucune saturation de la voie de détection 10D du système LIDAR 10 n'intervient, de sorte que de telles saturations potentielles n'altèrent pas un résultat de mesure qui concerne une caractéristique de la cible visée qui pourrait dépendre de la forme d'enveloppe. Par contre, lorsque le niveau d'atténuation est diminué, progressivement et dans une mesure suffisante, les saturations causées par divers composants de la voie de détection 10D du système LIDAR 10 modifient la forme de l'enveloppe de l'impulsion telle que détectée. Cette modification de forme d'enveloppe peut altérer des résultats de mesure de certaines caractéristiques de la cible, tels que produits par le système LIDAR 10. Par exemple, une modification de forme d'enveloppe peut altérer un résultat de mesure de vitesse de la cible, lorsque ce résultat est déduit d'une analyse fréquentielle du signal de détection hétérodyne, combinée avec un calcul d'effet Doppler. La connaissance de la déformation d'enveloppe qui est causée par la voie de détection du système LIDAR, lorsque l'intensité de la partie du rayonnement qui est rétroréfléchie ou rétrodiffusée par la cible est trop élevée, permet de corriger au moins partiellement une telle erreur dans le résultat de la mesure de vitesse de la cible. En outre, une telle caractérisation du fonctionnement de la voie de détection 10D peut être utilisée avantageusement pour fournir une limite maximale pour l'intensité du signal optique qui est reçu par le détecteur 7, en deçà de laquelle une saturation est évitée.

Ces caractérisations de forme d'enveloppe, de décalage fréquentiel et de déformation d'enveloppe, permettent de vérifier un fonctionnement du système LIDAR à partir de l'étape de calibration, telle que proposée par l'invention, d'une façon qui est particulièrement aisée, rapide et économique par rapport à une session de contrôle du système LIDAR qui serait réalisée en atelier.

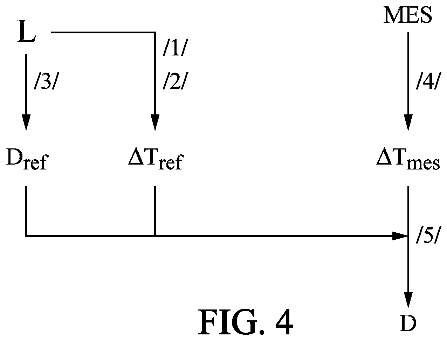

[Fig. 4] récapitule le principe de l'invention. La fourniture du chemin optique de référence avec la fibre optique 20 de longueur L procure la valeur de référence de distance de propagation libre D_{ref}, soit par calcul, soit en utilisant des montages optiques qui sont similaires à ceux des figures [Fig.3a]-[Fig. 3d]. Cette obtention de la valeur de référence D_{ref} est l'étape /3/ du procédé de calibration de l'invention. Par ailleurs, la valeur de référence de mesure ΔT_{ref} est obtenue lors d'une exécution d'une séquence de fonctionnement du système LIDAR 10 qui est dédiée à sa calibration, avec le chemin optique de référence qui est couplé optiquement au système LIDAR 10. Cette obtention de la valeur de référence ΔT_{ref}, qui est indépendante de l'obtention de D_{ref}, constitue les étapes /1/ et /2/ du procédé de calibration de l'invention. Enfin, l'exécution d'une séquence de fonctionnement du système LIDAR 10 en le pointant vers une cible sans utiliser le chemin optique de référence, constitue une mesure utile MES. Cette séquence de mesure utile fournit la valeur de mesure ΔTₘₑₛ, et correspond à l'étape /4/. Enfin, la combinaison de la valeur ΔTₘₑₛ avec les valeurs de référence ΔT_{ref} et D_{ref} fournit le résultat pour la valeur de distance d'éloignement D de la cible, correspondant à l'étape /5/ introduite dans la partie générale de la présente description.

Il est entendu que l'invention peut être reproduite en modifiant des aspects secondaires des modes de mise en oeuvre qui ont été décrits ci-dessus, tout en conservant certains au moins des avantages cités. Notamment, bien que l'invention ait été décrite en détail pour des systèmes LIDAR monostatiques, elle peut aussi être appliquée à des systèmes LIDAR bistatiques. En outre, toutes les valeurs numériques qui ont été citées ne l'ont été qu'à titre d'illustration, et peuvent être changées en fonction de l'application considérée.

## Revendications

1. Procédé de calibration d'un système LIDAR (10), afin de fournir une valeur de référence de mesure (ΔT_{ref}) qui corresponde à une valeur de référence de distance de propagation libre (D_{ref}), lesdites valeurs de référence de mesure et de distance de propagation libre étant destinées à être utilisées comme calibration du système LIDAR pour évaluer une distance d'éloignement (D) d'au moins une cible (100) à caractériser en utilisant ledit système LIDAR, le procédé comprenant les étapes suivantes :
/1/ coupler le système LIDAR (10) à un chemin optique de référence qui est constitué à partir d'au moins une fibre optique (20) efficace pour guider un rayonnement émis par le système LIDAR lors d'un fonctionnement dudit système LIDAR, de sorte qu'une partie au moins du rayonnement parcoure le chemin optique de référence entre une voie d'émission (10E) et une voie de détection (10D) du système LIDAR, le chemin optique de référence ayant une longueur connue ;
/2/ réaliser une séquence de mesure de distance en utilisant le système LIDAR (10) couplé au chemin optique de référence tel que résultant de l'étape /1/, pour obtenir une valeur de mesure qui est représentative d'une durée de propagation du rayonnement dans le chemin optique de référence, et qui est destinée à constituer la valeur de référence de mesure (ΔT_{ref}) ; puis
/3/ convertir la longueur connue du chemin optique de référence en valeur de distance de propagation libre pour le rayonnement, selon un principe d'égalité de durée de propagation, pour former la valeur de référence de distance de propagation libre (D_{ref}), et associer ladite valeur de référence de distance de propagation libre à la valeur de référence de mesure (ΔT_{ref}) afin de constituer la calibration du système LIDAR (10),
le procédé étant **caractérisé en ce que** le chemin optique de référence qui est constitué à partir de l'au moins une fibre optique (20) est incorporé à l'intérieur du système LIDAR.

2. Procédé selon la revendication 1, suivant lequel le système LIDAR (10) est d'un type monostatique, pour lequel des ports optiques de sortie et de détection (5) du système LIDAR sont confondus, et le procédé comprend en outre l'étape préliminaire suivante, à effectuer avant l'étape /1/ :
/0/ déterminer une valeur limite de distance telle que des parties du rayonnement émis par le système LIDAR (10) qui sont réfléchies par des composants internes audit système LIDAR, correspondent à des durées entre émission et détection qui sont équivalentes à celles de cibles situées à moins de cette valeur limite de distance en avant d'un port optique de sortie (5 ; 5a) du système LIDAR,
la longueur du chemin optique de référence étant sélectionnée telle que la valeur de distance de propagation libre (D_{ref}) soit supérieure à la valeur limite de distance qui a été déterminée à l'étape /0/.

3. Procédé selon la revendication 1 ou 2, comprenant en outre les étapes suivantes :
/4/ effectuer une mesure relative à ladite moins une cible (100) à caractériser en dirigeant une ligne de visée du système LIDAR (10) vers ladite au moins une cible indépendamment du chemin optique de référence, de façon à recueillir une autre valeur de mesure (ΔTₘₑₛ), ladite autre valeur de mesure étant représentative de la distance d'éloignement (D) de ladite au moins une cible ; puis
/5/ calculer une valeur pour la distance d'éloignement (D) de ladite au moins une cible (100) en combinant ladite autre valeur de mesure (ΔTₘₑₛ) avec la valeur de référence de mesure (ΔT_{ref}) et la valeur de référence de distance de propagation libre (D_{ref}) qui correspond à la longueur du chemin optique de référence.

4. Procédé selon la revendication 3, suivant lequel le chemin optique de référence qui est constitué à partir de l'au moins une fibre optique (20) est couplé optiquement au système LIDAR (10) de façon continue pendant l'étape /4/, de sorte qu'une première partie d'un rayonnement qui est émis par ledit système LIDAR soit utilisée pour effectuer la mesure relative à ladite moins une cible (100), et qu'une seconde partie du même rayonnement soit utilisée simultanément pour obtenir la valeur de mesure qui est représentative de la durée de propagation dans le chemin optique de référence, et suivant lequel la valeur de référence de mesure (ΔT_{ref}) qui est constituée par la durée de propagation dans le chemin optique de référence telle que mesurée pendant l'étape /4/ est utilisée à l'étape /5/.

5. Procédé selon l'une quelconque des revendications précédentes, suivant lequel le système LIDAR (10) est adapté pour effectuer des mesures selon un principe de détection hétérodyne, y compris pour fournir à l'étape /2/ la valeur de référence de mesure (ΔT_{ref}), et le cas échéant, pour fournir à l'étape /4/ ladite autre valeur de mesure (ΔTₘₑₛ) qui est représentative de la distance d'éloignement (D) de ladite au moins une cible (100) à caractériser.

6. Procédé selon l'une quelconque des revendications 1 à 5, suivant lequel, à l'étape /1/, une première extrémité (21) de la fibre optique (20) du chemin optique de référence est couplée à la voie d'émission (10E) du système LIDAR (10), et une seconde extrémité (22) de ladite fibre optique, opposée à ladite première extrémité, est couplée à la voie de détection (10D) du système LIDAR, de sorte qu'une partie au moins du rayonnement émis par le système LIDAR pénètre dans la fibre optique par ladite première extrémité, puis ressorte par ladite seconde extrémité en étant transmise à la voie de détection du système LIDAR.

7. Procédé selon l'une quelconque des revendications 1 à 5, suivant lequel le système LIDAR (10) est d'un type monostatique ; et
la fibre optique (20) possède une première extrémité (21) et une seconde extrémité (22), ladite seconde extrémité étant opposée à ladite première extrémité et munie d'un réflecteur (23), de sorte que du rayonnement qui se propage dans la fibre optique à partir de la première extrémité soit rétroréfléchi par le réflecteur au niveau de la seconde extrémité, à l'intérieur de ladite fibre optique en direction de la première extrémité ; et
l'étape /1/ comprend de coupler le système LIDAR (10) à la fibre optique (20) de sorte qu'une partie au moins du rayonnement émis par ledit système LIDAR (10) pénètre dans ladite fibre optique par la première extrémité (21), et une partie au moins du rayonnement rétroréfléchi qui ressort par ladite première extrémité soit transmise à la voie de détection (10D) du système LIDAR.

8. Procédé selon la revendication 7, suivant lequel les voies d'émission (10E) et de détection (10D) du système LIDAR (10) sont couplées à un port optique de sortie (5) dudit système LIDAR par un circulateur optique (4),
et suivant lequel la première extrémité (21) de la fibre optique (20) du chemin optique de référence est couplée optiquement à un port optique d'entrée-sortie (43 ; 44) du circulateur optique (4), ledit circulateur optique transmettant lors de l'étape /2/ le rayonnement du système LIDAR à la fibre optique via le port optique d'entrée-sortie du circulateur optique, et transmettant aussi lors de l'étape /2/ à la voie de détection (10D) du système LIDAR, le rayonnement reçu par ledit port optique d'entrée-sortie du circulateur optique en provenance de la fibre optique.

9. Procédé selon l'une quelconque des revendications précédentes, suivant lequel la valeur de référence de distance de propagation libre (D_{ref}) est établie conformément à un bilan différentiel de délais de transmission, de détection et/ou de traitement de signal qui sont effectifs pour le rayonnement du système LIDAR (10), entre des chemins d'émission et de détection dudit rayonnement qui sont utilisés lors de l'étape /2/, et d'autres chemins d'émission et de détection du rayonnement qui sont utilisés pour caractériser ladite au moins une cible (100).

10. Procédé selon l'une quelconque des revendications précédentes, suivant lequel le système LIDAR (10) est d'un type à impulsions de rayonnement séparées, pour lequel la distance d'éloignement de ladite au moins une cible (100) à caractériser est évaluée conformément à une durée entre une émission d'une impulsion de rayonnement en direction de ladite au moins une cible à caractériser, et une détection d'une partie de l'impulsion de rayonnement qui a été réfléchie ou rétrodiffusée par ladite au moins une cible à caractériser.

11. Procédé selon la revendication 10, comprenant en outre d'effectuer au moins l'une parmi :
- une caractérisation d'enveloppe d'impulsion, relative à une impulsion de rayonnement qui a été émise puis détectée par le système LIDAR (10) ;
- une caractérisation d'un décalage fréquentiel, tel qu'apparaissant entre l'impulsion de rayonnement telle qu'émise par le système LIDAR (10), et ladite impulsion de rayonnement telle que détectée ensuite par ledit système LIDAR ; et
- une caractérisation d'une déformation d'enveloppe d'impulsion de rayonnement, ladite déformation étant causée par une saturation de la voie de détection (10D) du système LIDAR (10),
chacune desdites caractérisations étant effectuée à partir d'un signal de détection produit par le système LIDAR (10) lors de l'étape /2/, pour une ou plusieurs exécutions successives de ladite étape /2/.

12. Procédé selon l'une quelconque des revendications précédentes, suivant lequel le chemin optique de référence est pourvu d'un atténuateur d'intensité (24), de préférence un atténuateur variable, agencé pour atténuer une intensité du rayonnement qui est transmis par la fibre optique (20) à la voie de détection (10D) du système LIDAR (10).

13. Procédé selon l'une quelconque des revendications précédentes, suivant lequel le chemin optique de référence qui est constitué à partir de ladite moins une fibre optique (20) est adapté pour être couplé réversiblement au système LIDAR (10) à l'étape /1/, de façon à pouvoir être découplé optiquement dudit système LIDAR lors de séquences de mesures utiles pour caractériser des cibles.

14. Procédé selon l'une quelconque des revendications précédentes, suivant lequel le système LIDAR (10) est adapté pour l'une au moins des applications suivantes :
- des mesures météorologiques, par exemple des mesures de turbulences atmosphériques ;
- des mesures de diffusion de polluants atmosphériques ;
- des mesures de cisaillement d'un écoulement atmosphérique, par exemple au niveau d'un aéroport ;
- des mesures de position et de durée de vie d'au moins un vortex qui est présent dans un écoulement de fluide ;
- des mesures anémométriques qui sont effectuées à partir d'un aéronef en vol, notamment à partir d'un dirigeable ou d'un drone ;
- des mesures anémométriques qui sont effectuées pour optimiser un fonctionnement d'éolienne ; et
- des mesures anémométriques qui sont effectuées pour ajuster un vol d'aéronef en formation, ou pour ajuster un vol de drone.

15. Système LIDAR (10), muni d'un chemin optique de référence qui est constitué à partir d'au moins une fibre optique (20) efficace pour guider un rayonnement émis par le système LIDAR lors d'un fonctionnement dudit système LIDAR, de sorte qu'une partie au moins du rayonnement parcoure le chemin optique de référence entre une voie d'émission (10E) et une voie de détection (10D) du système LIDAR, le système LIDAR étant adapté pour mettre en œuvre un procédé de calibration qui est conforme à l'une quelconque des revendications précédentes, le système LIDAR (10) étant **caractérisé en ce que** le chemin optique de référence qui est constitué à partir de l'au moins une fibre optique (20) est incorporé à l'intérieur dudit système LIDAR.

16. Système LIDAR (10) selon la revendication 15, dans lequel le chemin optique de référence est couplé optiquement à la voie d'émission (10E) et à la voie de détection (10D) du système LIDAR, en parallèle avec un trajet externe au système LIDAR qui est destiné à être suivi par du rayonnement émis par ledit système LIDAR en direction de l'au moins une cible (100), et utile pour évaluer la distance d'éloignement (D) de ladite cible, de sorte que le rayonnement provenant de ladite voie d'émission soit transmis simultanément au chemin optique de référence et en direction de l'au moins une cible, et qu'une même séquence de détection fournisse à la fois la valeur de référence de mesure (ΔT_{ref}) et une autre valeur de mesure (ΔTₘₑₛ) qui est relative au trajet externe jusqu'à la cible.

17. Système LIDAR (10) selon la revendication 15 ou 16, ayant l'une au moins des caractéristiques suivantes :
- ledit système LIDAR (10) est adapté pour mettre en œuvre un mode de détection hétérodyne ;
- ledit système LIDAR (10) est d'un type à impulsions de rayonnement séparées, pour lequel la distance d'éloignement (D) de ladite au moins une cible (100) à caractériser est évaluée à partir d'une durée entre une émission d'une impulsion de rayonnement en direction de ladite au moins une cible à caractériser, et une détection d'une partie de l'impulsion de rayonnement qui a été réfléchie ou rétrodiffusée par ladite au moins une cible à caractériser ;
- ledit système LIDAR (10) comprend une source laser (1), pour produire le rayonnement qui est émis en direction de ladite au moins une cible (100) à caractériser ; et
- ledit système LIDAR (10) est adapté pour mesurer au moins une grandeur atmosphérique, notamment une vitesse de vent, à partir d'une partie du rayonnement qui est émis par le système LIDAR, cette partie de rayonnement étant rétrodiffusée par des particules en suspension dans de l'air, puis détectée par le système LIDAR.

## Patentansprüche

1. Verfahren zum Kalibrieren eines LIDAR-Systems (10), um einen Messreferenzwert (ΔT_{Ref}) bereitzustellen, der einem Referenzwert für die freie Ausbreitungsdistanz (D_{Ref}) entspricht, wobei die Messreferenzwerte und die Referenzwerte für die freie Ausbreitungsdistanz dazu bestimmt sind, als Kalibrierung des LIDAR-Systems verwendet zu werden, um eine Entfernung (D) von mindestens einem Ziel (100) zu bewerten, das unter Verwendung des LIDAR-Systems charakterisiert werden soll, wobei das Verfahren die folgenden Schritte umfasst:
/1/ Koppeln des LIDAR-Systems (10) mit einem Referenzstrahlengang, der aus mindestens einem Lichtwellenleiter (20) besteht, der das Leiten der vom LIDAR-System während des Betriebs des LIDAR-Systems emittierten Strahlung bewirkt, sodass zumindest ein Teil der Strahlung den Referenzstrahlengang zwischen einem Emissionspfad (10E) und einem Detektionspfad (10D) des LIDAR-Systems durchläuft, wobei der Referenzstrahlengang eine bekannte Länge aufweist;
/2/ Durchführen einer Entfernungsmesssequenz unter Verwendung des LIDAR-Systems (10), das mit dem Referenzstrahlengang gekoppelt ist, wie aus Schritt /1/ hervorgeht, um einen Messwert zu erhalten, der repräsentativ für eine Ausbreitungszeit der Strahlung im Referenzstrahlengang ist, und der den Messreferenzwert (ΔT_{Ref}) bilden soll; dann
/3/ Umwandeln der bekannten Länge des Referenzstrahlengangs in einen Wert für die freie Ausbreitungsdistanz der Strahlung nach dem Prinzip der gleichen Ausbreitungsdauer, um den Referenzwert für die freie Ausbreitungsdistanz (D_{ref}) zu bilden, und Zuordnen des Referenzwerts für die freie Ausbreitungsdistanz zu dem Messreferenzwert (ΔT_{Ref}), um die Kalibrierung des LIDAR-Systems (10) zu bilden, wobei das Verfahren **dadurch gekennzeichnet ist, dass** der Referenzstrahlengang, der aus dem mindestens einen Lichtwellenleiter (20) besteht, in das LIDAR-System integriert ist.

2. Verfahren nach Anspruch 1, wobei das LIDAR-System (10) vom monostatischen Typ ist, bei dem die optischen Ausgangs- und Detektionsanschlüsse (5) des LIDAR-Systems zusammengeführt werden, und wobei das Verfahren ferner den folgenden vorbereitenden Schritt umfasst, der vor Schritt /1/ durchzuführen ist:
/0/ Bestimmen eines Entfernungsgrenzwerts, so dass Teile der vom LIDAR-System (10) emittierten Strahlung, die von Komponenten innerhalb des LIDAR-Systems reflektiert werden, Zeitspannen zwischen Emission und Detektion entsprechen, die gleichwertig mit denen von Zielen sind, die sich um weniger als diesen Entfernungsgrenzwert vor einem optischen Ausgangsanschluss (5; 5a) des LIDAR-Systems befinden,
wobei die Länge des Referenzstrahlengangs so gewählt wird, dass der Wert für die freie Ausbreitungsdistanz (D_{Ref}) größer ist als der in Schritt /0/ bestimmte Entfernungsgrenzwert.

3. Verfahren nach Anspruch 1 oder 2, ferner umfassend die folgenden Schritte:
/4/ Durchführen einer Messung in Bezug auf das mindestens eine zu charakterisierende Ziel (100), indem eine Sichtlinie des LIDAR-Systems (10) unabhängig vom Referenzstrahlengang auf das mindestens eine Ziel gerichtet wird, um einen weiteren Messwert (ΔT_{Mess}) zu erfassen, wobei der weitere Messwert die Entfernung (D) von dem mindestens einen Ziel darstellt; dann
/5/ Berechnen eines Wertes für die Entfernung (D) des mindestens einen Ziels (100) durch Kombinieren des weiteren Messwerts (ΔT_{Mess}) mit dem Messreferenzwert (ΔT_{Ref}) und dem Referenzwert für die freie Ausbreitungsdistanz (D_{Ref}), was der Länge des Referenzstrahlengangs entspricht.

4. Verfahren nach Anspruch 3, wobei der Referenzstrahlengang, der aus dem mindestens einen Lichtwellenleiter (20) besteht, während Schritt /4/ optisch durchgängig mit dem LIDAR-System (10) gekoppelt ist, sodass ein erster Teil einer vom LIDAR-System emittierten Strahlung zum Durchführen der Messung bezüglich des mindestens einen Ziels (100) verwendet wird und ein zweiter Teil der gleichen Strahlung gleichzeitig zum Erhalten des Messwerts verwendet wird, der die Ausbreitungsdauer im Referenzstrahlengang darstellt, und wobei der Messreferenzwert (ΔT_{Ref}), der aus der während Schritt /4/ gemessenen Ausbreitungsdauer im Referenzstrahlengang besteht, in Schritt /5/ verwendet wird.

5. Verfahren nach einem der vorstehenden Ansprüche, wobei das LIDAR-System (10) dazu ausgelegt ist, Messungen nach einem Heterodyn-Detektionsprinzip durchzuführen, einschließlich der Bereitstellung des Messreferenzwerts (ΔT_{Ref}) in Schritt /2/, und gegebenenfalls der Bereitstellung des anderen Messwerts (ΔT_{Mess}) in Schritt /4/, der für die Entfernung (D) von dem mindestens einen zu charakterisierenden Ziel (100) repräsentativ ist.

6. Verfahren nach einem der Ansprüche 1 bis 5, wobei in Schritt /1/ ein erstes Ende (21) des Lichtwellenleiters (20) des Referenzstrahlengangs mit dem Emissionspfad (10E) des LIDAR-Systems (10) gekoppelt wird und ein zweites Ende (22) des Lichtwellenleiters, das dem ersten Ende gegenüber liegt, mit dem Detektionspfad (10D) des LIDAR-Systems gekoppelt wird, sodass zumindest ein Teil der vom LIDAR-System emittierten Strahlung durch das erste Ende in den Lichtwellenleiter eintritt, dann durch das zweite Ende austritt und dabei an den Detektionspfad des LIDAR-Systems übertragen wird.

7. Verfahren nach einem der Ansprüche 1 bis 5, wobei das LIDAR-System (10) vom monostatischen Typ ist; und
der Lichtwellenleiter (20) ein erstes Ende (21) und ein zweites Ende (22) aufweist, wobei das zweite Ende dem ersten Ende gegenüber liegt und mit einem Reflektor (23) versehen ist, sodass Strahlung, die sich in dem Lichtwellenleiter vom ersten Ende aus ausbreitet, durch den Reflektor am zweiten Ende innerhalb des Lichtwellenleiters in Richtung des ersten Endes zurück reflektiert wird; und Schritt /1/ das Koppeln des LIDAR-Systems (10) mit dem Lichtwellenleiter (20) umfasst, sodass zumindest ein Teil der von dem LIDAR-System (10) emittierten Strahlung durch das erste Ende (21) in den Lichtwellenleiter eintritt und zumindest ein Teil der durch das erste Ende austretenden zurück reflektierten Strahlung zum Detektionspfad (10D) des LIDAR-Systems übertragen wird.

8. Verfahren nach Anspruch 7, wobei der Emissionspfad (10E) und der Detektionspfad (10D) des LIDAR-Systems (10) über einen optischen Zirkulator (4) mit einem optischen Ausgangsanschluss (5) des LIDAR-Systems gekoppelt sind, und wobei das erste Ende (21) des Lichtwellenleiters (20) des Referenzstrahlengangs optisch mit einem optischen Eingangs-/Ausgangsanschluss (43; 44) des optischen Zirkulators (4) gekoppelt ist, wobei der optische Zirkulator während Schritt /2/ die Strahlung des LIDAR-Systems über den optischen Eingangs-/Ausgangsanschluss des optischen Zirkulators an den Lichtwellenleiter überträgt, und während Schritt /2/ auch die von dem optischen Eingangs-/Ausgangsanschluss des optischen Zirkulators aus dem Lichtwellenleiter empfangene Strahlung an den Detektionspfad (10D) des LIDAR-Systems überträgt.

9. Verfahren nach einem der vorstehenden Ansprüche, wobei der Referenzwert für die freie Ausbreitungsdistanz (D_{Ref}) gemäß einer Differenzialbilanz von Signalübertragungs-, -detektions- und/oder -verarbeitungszeiten, die für die Strahlung des LIDAR-Systems (10) wirksam sind, zwischen Emissions- und Detektionspfaden der Strahlung, die während Schritt /2/ verwendet werden, und anderen Emissions- und Detektionspfaden der Strahlung, die zur Charakterisierung des mindestens einen Ziels (100) verwendet werden, erstellt wird.

10. Verfahren nach einem der vorstehenden Ansprüche, wobei das LIDAR-System (10) vom Typ mit getrennten Strahlungsimpulsen ist, wobei die Entfernung von dem mindestens einen zu charakterisierenden Ziel (100) entsprechend einer Zeitspanne zwischen einer Emission eines Strahlungsimpulses in Richtung des mindestens einen zu charakterisierenden Ziels und der Detektion eines Teils des Strahlungsimpulses, der von dem mindestens einen zu charakterisierenden Ziel reflektiert oder zurück gestreut wurde, bewertet wird.

11. Verfahren nach Anspruch 10, das ferner die Durchführung von mindestens einem der folgenden Schritte umfasst:
- eine Charakterisierung der Impulshüllkurve relativ zu einem Strahlungsimpuls, der emittiert und dann vom LIDAR-System (10) detektiert wurde;
- eine Charakterisierung einer Frequenzverschiebung, wie sie zwischen dem vom LIDAR-System (10) emittierten Strahlungsimpuls und dem anschließend vom LIDAR-System detektierten Strahlungsimpuls auftritt; und
- eine Charakterisierung einer Strahlungsimpulshüllkurvenverformung, wobei die Verformung durch eine Sättigung des Detektionspfads (10D) des LIDAR-Systems (10) verursacht wird,
wobei jede dieser Charakterisierungen ausgehend von einem vom LIDAR-System (10) während Schritt /2/ erzeugten Detektionssignals für eine oder mehrere aufeinanderfolgende Ausführungen des Schritts /2/ durchgeführt wird.

12. Verfahren nach einem der vorstehenden Ansprüche, wobei der Referenzstrahlengang mit einem Intensitätsdämpfer (24), vorzugsweise einem variablen Dämpfer, versehen ist, der dazu geeignet ist, die Intensität der Strahlung zu dämpfen, die von dem Lichtwellenleiter (20) an den Detektionspfad (10D) des LIDAR-Systems (10) übertragen wird.

13. Verfahren nach einem der vorstehenden Ansprüche, wobei der Referenzstrahlengang, der aus dem mindestens einen Lichtwellenleiter (20) besteht, in Schritt /1/ reversibel mit dem LIDAR-System (10) gekoppelt werden kann, so dass er während Messsequenzen, die zur Charakterisierung von Zielen nützlich sind, optisch von dem LIDAR-System entkoppelt werden kann.

14. Verfahren nach einem der vorstehenden Ansprüche, wobei das LIDAR-System (10) für mindestens eine der folgenden Anwendungen geeignet ist:
- meteorologische Messungen, beispielsweise Messungen der atmosphärischen Turbulenzen;
- Messungen der Diffusion von Luftschadstoffen;
- Messungen der Scherwirkung einer atmosphärischen Strömung, beispielsweise an einem Flughafen;
- Positions- und Lebensdauermessungen von mindestens einem Wirbel, der in einer Fluidströmung vorhanden ist;
- anemometrische Messungen, die von einem Luftfahrzeug im Flug aus durchgeführt werden, insbesondere von einem Luftschiff oder einer Drohne aus;
- anemometrische Messungen, die zur Optimierung des Betriebs von Windkraftanlagen durchgeführt werden; und
- anemometrische Messungen, die zur Anpassung eines Formationsfluges eines Luftfahrzeugs oder zur Anpassung eines Drohnenfluges durchgeführt werden.

15. LIDAR-System (10), das mit einem Referenzstrahlengang ausgestattet ist, der aus mindestens einem Lichtwellenleiter (20) besteht, der das Leiten der vom LIDAR-System während des Betriebs des LIDAR-Systems emittierten Strahlung bewirkt, sodass zumindest ein Teil der Strahlung den Referenzstrahlengang zwischen einem Emissionspfad (10E) und einem Detektionspfad (10D) des LIDAR-Systems durchläuft, wobei das LIDAR-System dazu geeignet ist, ein Kalibrierungsverfahren gemäß einem der vorstehenden Ansprüche durchzuführen,
wobei das LIDAR-System (10) **dadurch gekennzeichnet ist, dass** der Referenzstrahlengang, der aus dem mindestens einen Lichtwellenleiter (20) besteht, in das LIDAR-System integriert ist.

16. LIDAR-System (10) nach Anspruch 15, wobei der Referenzstrahlengang optisch mit dem Emissionspfad (10E) und dem Detektionspfad (10D) des LIDAR-Systems gekoppelt ist, parallel zu einem Pfad außerhalb des LIDAR-Systems, dem die vom LIDAR-System in Richtung des mindestens einen Ziels (100) emittierte Strahlung folgen soll und der zur Bewertung der Entfernung (D) zu dem Ziel dient, sodass die vom Emissionspfad ausgehende Strahlung gleichzeitig zum Referenzstrahlengang und in Richtung des mindestens einen Ziels übertragen wird und dass eine gleiche Detektionssequenz sowohl den Messreferenzwert (ΔT_{Ref}) als auch einen weiteren Messwert (ΔT_{Mess}) bereitstellt, der relativ zum externen Pfad bis zum Ziel ist.

17. LIDAR-System (10) nach Anspruch 15 oder 16, das mindestens eine der folgenden Eigenschaften aufweist:
- das LIDAR-System (10) ist dazu geeignet, einen Heterodyn-Detektionsmodus zu implementieren;
- das LIDAR-System (10) ist vom Typ mit getrennten Strahlungsimpulsen, wobei die Entfernung (D) von dem mindestens einen zu charakterisierenden Ziel (100) aus einer Zeitspanne zwischen der Emission eines Strahlungsimpulses in Richtung des mindestens einen zu charakterisierenden Ziels und der Detektion eines Teils des Strahlungsimpulses, der von dem mindestens einen zu charakterisierenden Ziel reflektiert oder zurück gestreut wurde, bewertet wird;
- das LIDAR-System (10) umfasst eine Laserquelle (1) zur Erzeugung der Strahlung, die in Richtung des mindestens einen zu charakterisierenden Ziels (100) emittiert wird; und
- das LIDAR-System (10) ist dazu geeignet, aus einem Teil der vom LIDAR-System emittierten Strahlung mindestens eine atmosphärische Größe, insbesondere eine Windgeschwindigkeit, zu messen, wobei dieser Teil der Strahlung von in der Luft schwebenden Partikeln zurück gestreut und dann vom LIDAR-System detektiert wird.

## Claims

1. A method for calibrating a LIDAR system (10), in order to provide a measurement reference value (ΔT_{ref}) which corresponds to a free-space propagation distance reference value (D_{ref}), said measurement and free-space propagation distance reference values being intended to be used for calibration of the LIDAR system in order to evaluate a separating distance (D) of at least one target (100) to be characterized using said LIDAR system, the method comprising the following steps:
/1/ coupling the LIDAR system (10) to a reference optical path which is formed from at least one optical fiber (20) efficient for guiding radiation emitted by the LIDAR system during an operation of said LIDAR system, so that at least a portion of the radiation travels the reference optical path between an emission channel (10E) and a detection channel (10D) of the LIDAR system, the reference optical path having a known length;
/2/ carrying out a distance measurement sequence using the LIDAR system (10) coupled to the reference optical path as resulting from step /1/, in order to obtain a measurement value which is representative of a time of radiation propagation in the reference optical path, and which is intended to constitute the measurement reference value (ΔT_{ref}); then
/3/ converting the known length of the reference optical path into a free-space propagation distance value for the radiation, according to a principle of propagation time equality, to form the free-space propagation distance reference value (D_{ref}), and associating said free-space propagation distance reference value with the measurement reference value (ΔT_{ref}) in order to constitute the calibration of the LIDAR system (10),
the method being **characterized in that** the reference optical path formed from the at least one optical fiber (20) is incorporated within the LIDAR system.

2. The method according to claim 1, wherein the LIDAR system (10) is of a monostatic type, whereby optical output and detection apertures (5) of the LIDAR system are coincident, and the method further comprises the following preliminary step to be carried out before step /1/:
/0/ determining a distance limit value such that portions of the radiation emitted by the LIDAR system (10) which are reflected by components internal to said LIDAR system, correspond to times between emission and detection which are equivalent to those of targets located at less than this distance limit value in front of an output optical aperture (5; 5a) of the LIDAR system,
the length of the reference optical path being selected such that the free-space propagation distance value (D_{ref}) is greater than the distance limit value determined in step /0/.

3. The method according to claim 1 or 2, further comprising the following steps:
/4/ performing a measurement relating to said at least one target (100) to be **characterized by** directing a line of sight of the LIDAR system (10) towards said at least one target independently of the reference optical path, so as to collect another measurement value (ΔTₘₑₛ), said another measurement value being representative of the separating distance (D) of said at least one target; then
/5/ calculating a value for the separating distance (D) of said at least one target (100) by combining said another measurement value (ΔTₘₑₛ) with the measurement reference value (ΔT_{ref}) and with the free-space propagation distance reference value (D_{ref}) which corresponds to the length of the reference optical path.

4. The method according to claim 3, wherein the reference optical path which is formed from the at least one optical fiber (20) is optically coupled to the LIDAR system (10) in a continuous manner during step /4/, so that a first portion of a radiation emitted by said LIDAR system is used to carry out the measurement relating to said at least one target (100), and so that a second portion of the same radiation is used simultaneously to obtain the measurement value representative of the propagation time in the reference optical path, and wherein the measurement reference value (ΔT_{ref}) which is composed of the time of propagation in the reference optical path as measured during step /4/ is used in step /5/.

5. The method according to any one of the preceding claims, wherein the LIDAR system (10) is adapted to carry out measurements according to a principle of heterodyne detection, including to provide the measurement reference value (ΔT_{ref}) in step /2/, and where appropriate to provide in step /4/ said another measurement value (ΔTₘₑₛ) which is representative of the separating distance (D) of said at least one target (100) to be characterized.

6. The method according to any one of claims 1 to 5, wherein, in step /1/, a first end (21) of the optical fiber (20) of the optical reference path is coupled to the emission channel (10E) of the LIDAR system (10), and a second end (22) of said optical fiber, opposite to said first end, is coupled to the detection channel (10D) of the LIDAR system, so that at least a portion of the radiation emitted by the LIDAR system enters the optical fiber through said first end, then exits through said second end while being transmitted to the detection channel of the LIDAR system.

7. The method according to any one of claims 1 to 5, wherein the LIDAR system (10) is of a monostatic type; and
the optical fiber (20) has a first end (21) and a second end (22), said second end being opposite to said first end and provided with a reflector (23) so that radiation which propagates in the optical fiber from the first end is retroreflected by the reflector at the second end, inside said optical fiber and toward the first end; and
step /1/ comprises coupling the LIDAR system (10) to the optical fiber (20) so that at least a portion of the radiation emitted by said LIDAR system (10) enters said optical fiber through the first end (21), and at least a portion of the retroreflected radiation that exits through said first end is transmitted to the detection channel (10D) of the LIDAR system.

8. The method according to claim 7, wherein the emission (10E) and detection (10D) channels of the LIDAR system (10) are coupled to an optical output aperture (5) of said LIDAR system by an optical circulator (4),
and wherein the first end (21) of the optical fiber (20) of the reference optical path is optically coupled to an optical input-output aperture (43; 44) of the optical circulator (4), said optical circulator transmitting the radiation, during step /2/, from the LIDAR system to the optical fiber through the optical input-output aperture of the optical circulator, and also transmitting the radiation received by said optical input-output aperture of the optical circulator and coming from the optical fiber, to the detection channel (10D) of the LIDAR system during step /2/.

9. The method according to any one of the preceding claims, wherein the free-space propagation distance reference value (D_{ref}) is set in accordance with a differential assessment of delays in transmission, detection, and/or signal processing which are effective for the radiation of the LIDAR system (10), between emission and detection paths of said radiation which are used during step /2/, and other radiation emission and detection paths which are used to characterize said at least one target (100).

10. The method according to any one of the preceding claims, wherein the LIDAR system (10) is of a type with separate radiation pulses, for which the separating distance of said at least one target (100) to be characterized is evaluated in accordance with a time between an emission of a radiation pulse toward said at least one target to be characterized, and a detection of a portion of the radiation pulse which has been reflected or backscattered by said at least one target to be characterized.

11. The method according to claim 10, further comprising performing at least one among:
- a pulse envelope characterization, relating to a radiation pulse emitted and then detected by the LIDAR system (10);
- a characterization of a frequency shift, as appearing between the radiation pulse as emitted by the LIDAR system (10) and said radiation pulse as subsequently detected by said LIDAR system; and
- a characterization of a deformation of the radiation pulse envelope, said deformation being caused by saturation of the detection channel (10D) of the LIDAR system (10),
each of said characterizations being carried out based on a detection signal produced by the LIDAR system (10) during step /2/, for one or more successive executions of said step /2/.

12. The method according to any one of the preceding claims, wherein the reference optical path is provided with an intensity attenuator (24), preferably a variable attenuator, arranged to attenuate an intensity of the radiation transmitted by the optical fiber (20) to the detection channel (10D) of the LIDAR system (10).

13. The method according to any one of the preceding claims, wherein the reference optical path which is formed from said at least one optical fiber (20) is adapted to be reversibly coupled to the LIDAR system (10) in step /1/, so as to be able to be optically decoupled from said LIDAR system during measurement sequences useful for characterizing targets.

14. The method according to any one of the preceding claims, wherein the LIDAR system (10) is adapted for at least one of the following applications:
- meteorological measurements, for example measurements of atmospheric turbulence;
- measurements of atmospheric pollutant diffusion;
- measurements of shear of an atmospheric flow, for example at an airport;
- measurements of position and lifetime of at least one vortex present in a flow of fluid;
- anemometric measurements performed from an aircraft in flight, in particular from an airship or drone;
- anemometric measurements performed to optimize an operation of a wind turbine; and
- anemometric measurements performed to adjust a flight of aircrafts in formation, or to adjust a flight of a drone.

15. A LIDAR system (10), provided with a reference optical path which is formed from at least one optical fiber (20) efficient for guiding radiation emitted by the LIDAR system during operation of said LIDAR system, so that at least a portion of the radiation travels the reference optical path between an emission channel (10E) and a detection channel (10D) of the LIDAR system, the LIDAR system being adapted to implement a calibration method which is in accordance with any one of the preceding claims,
the LIDAR system (10) being **characterized in that** the reference optical path formed from the at least one optical fiber (20) is incorporated inside said LIDAR system.

16. The LIDAR system (10) according to claim 15, wherein the reference optical path is optically coupled to the emission channel (10E) and to the detection channel (10D) of the LIDAR system, in parallel with a path external to the LIDAR system which is intended to be followed by radiation emitted by said LIDAR system toward the at least one target (100), and useful for evaluating the separating distance (D) of said target, so that the radiation coming from said emission channel is transmitted simultaneously in the reference optical path and toward of the at least one target, and that a same detection sequence provides both the measurement reference value (ΔT_{ref}) and another measurement value (ΔTₘₑₛ) that relates to the external path to the target.

17. The LIDAR system (10) according to claim 15 or 16, having at least one of the following features:
- said LIDAR system (10) is adapted to implement a heterodyne detection mode;
- said LIDAR system (10) is of a type with separate radiation pulses, for which the separating distance (D) of said at least one target (100) to be characterized is evaluated based on a time between an emission of a radiation pulse toward said at least one target to be characterized, and a detection of a portion of the radiation pulse which has been reflected or backscattered by said at least one target to be characterized;
- said LIDAR system (10) comprises a laser source (1), for producing the radiation emitted toward said at least one target (100) to be characterized; and
- said LIDAR system (10) is adapted to measure at least one atmospheric quantity, in particular a wind speed, based on a portion of the radiation emitted by the LIDAR system, this portion of the radiation being backscattered by particles in suspension in air, then detected by the LIDAR system.
